# EUROPÄISCHE PATENTSCHRIFT

(11) **EP 3 645 431 B1**
(45) Veröffentlichungstag und Bekanntmachung des Hinweises auf die Patenterteilung: **18.06.2025**
(21) Anmeldenummer: 18734208.4
(22) Anmeldetag: 26.06.2018
(51) Int. Cl.: B65G 47/86

(54) **KLAMMERVORRICHTUNG ZUM HALTEN EINES BEHÄLTERS IN EINER BEHÄLTERBEHANDLUNGSANLAGE**
CLAMPING DEVICE FOR RETAINING A CONTAINER IN A CONTAINER TREATMENT PLANT
DISPOSITIF DE SERRAGE DESTINÉ À RETENIR UN RÉCIPIENT DANS UNE INSTALLATION DE TRAITEMENT DE RÉCIPIENT

(30) Priorität: 26.06.2017 DE 102017114158
(43) Veröffentlichungstag der Anmeldung: 06.05.2020
(73) Patentinhaber: Krones AG, 93073 Neutraubling (DE)
(72) Erfinder: VOEGELE, Dieter, 93073 Neutraubling (DE); GLOETZL, Reiner, 93073 Neutraubling (DE)
(74) Vertreter: Nordmeyer, Philipp Werner
(86) Internationale Anmeldenummer: PCT/EP2018/067066
(87) Internationale Veröffentlichungsnummer: WO 2019/002267

(56) Entgegenhaltungen:
- EP-A1- 0 939 044
- EP-A2- 0 795 500
- DE-A1- 102005 014 838
- DE-U1- 29 915 927

## Beschreibung

### Technisches Gebiet

Die vorliegende Erfindung betrifft eine Klammervorrichtung zum Halten eines Behälters in einer Behälterbehandlungsanlage, insbesondere zum Halten einer Flasche in einer Getränkeabfüllanlage.

### Technischer Hintergrund

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den Behälter halten.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann.

Aus der EP 0 939 044 A1 (siehe Figur 3) ist eine Klammervorrichtung zum Halten eines Behälters in einer Behälterbehandlungsanlage bekannt. Die Klammervorrichtung umfasst zwei Klammerarme mit jeweils einem Halteabschnitt zur Anlage an den zu haltenden Behälter und mit jeweils einem Steuerabschnitt, auf welchen ein Steuernocken zum Bewegen der Halteabschnitte in eine Öffnungsposition und/oder in eine Schließposition wirkt, wobei an dem Steuerabschnitt eine Blattfeder angeordnet ist, auf welche der Steuernocken wirkt, und die Blattfeder in einer am Steuerabschnitt vorgesehenen Ausnehmung des Klammerarms angeordnet, an dem Steuerabschnitt gelagert und über eine Haltenase in der Ausnehmung gehalten ist.

Die EP 0 795 500 A2 beschreibt einen Transportstern für Gefäße mit einem drehbaren Grundkörper und mehreren an dessen Umfang schwenkbar gelagerten Greifarmen in Form von Doppelhebeln, an deren radial nach außen weisenden Enden Greifflächen für die Gefäße und an deren radial nach innen weisenden Enden Gegenflächen für beweglich im Grundkörper gelagerte Spreizkörper ausgebildet sind. Die Greifarme bestehen aus mindestens zwei gelenkig miteinander verbundenen Teilstücken, von denen mindestens eines die Greiffläche und ein anderes die Gegenfläche trägt. Die Gegenflächen für die Spreizkörper sind an lösbar an den zugehörigen Teilstücken der Greifarme befestigten Einsätzen aus verschleißfestem Material ausgebildet.

Die DE 10 2005 014 838 A1 beschreibt eine Klammer zum Halten von Gefäßen. Die DE 299 15 927 U1 beschreibt einen Flaschengreifer.

### Darstellung der Erfindung

Ausgehend von dem bekannten Stand der Technik ist es eine Aufgabe der vorliegenden Erfindung, eine Klammervorrichtung zum Halten eines Behälters in einer Behälterbehandlungsanlage anzugeben, welche ein verbessertes Halteverhalten aufweist.

Diese Aufgabe wird durch eine Klammervorrichtung mit den Merkmalen des Anspruchs 1 gelöst. Vorteilhafte Weiterbildungen ergeben sich aus den Unteransprüchen, der vorliegenden Beschreibung sowie den Figuren.

Entsprechend wird eine Klammervorrichtung zum Halten eines Behälters in einer Behälterbehandlungsanlage vorgeschlagen, die zwei Klammerarme mit jeweils einem Halteabschnitt zur Anlage an den zu haltenden Behälter umfasst, wobei die Klammerarme jeweils einen Steuerabschnitt, auf welchen ein Steuernocken zum Bewegen der Halteabschnitte in eine Öffnungsposition und/oder in eine Schließposition wirkt, aufweisen. Erfindungsgemäß ist an dem Steuerabschnitt eine starre Verschleißplatte angeordnet, auf welche der Steuernocken wirkt.

Dadurch, dass der Steuerabschnitt eine starre Verschleißplatte zur Aufnahme der vom Steuernocken ausgeübten Kräfte aufweist, kann das Verschleißverhalten der Klammervorrichtung und damit das Verschleißverhalten des Steuerabschnitts verbessert werden. Damit kann eine erhöhte Standzeit der Klammervorrichtung erreicht werden, so dass über einen längeren Zeitraum hinweg ein störungsfreier Betrieb der Klammervorrichtung ermöglicht wird.

Weiterhin kann mittels der starren Verschleißplatte erreicht werden, dass die Wahrscheinlichkeit für einen Defekt des Steuerabschnitts reduziert beziehungsweise vermieden werden kann.

Unter *"starr"* wird in diesem Zusammenhang verstanden, dass die Verschleißplatte beim Auftreten der von dem Steuernocken auf die Klammervorrichtung beziehungsweise auf den Steuerabschnitt der Klammervorrichtung aufgebrachten Kräfte keine beziehungsweise keine relevante Verformung erfährt, sondern - im Falle einer elastischen Vorspannung der starren Verschleißplatte - die Kräfte direkt an die elastischen Vorspannelemente übertragen werden.

Die starre Verschleißplatte ist in einer am Steuerabschnitt vorgesehenen Ausnehmung des Klammerarms angeordnet. Damit ergibt sich eine effiziente Konstruktion des Klammerarms, die dennoch zu einem verbesserten Verhalten der Klammervorrichtung führt.

Dabei ist die starre Verschleißplatte über eine Haltenase, die bevorzugt einstückig mit dem Klammerarm ausgebildet ist, in der Ausnehmung gehalten.

Ferner ist die starre Verschleißplatte schwimmend an dem Steuerabschnitt gelagert, bevorzugt mittels einer Halterung, eines Haltebolzens oder eines Formschlusselements.

Durch die schwimmende Lagerung wird eine Beweglichkeit der starren Verschleißplatte relativ zu dem Klammerarm in Reaktion auf die durch den Steuernocken aufgebrachten Kräfte zu ermöglicht. Durch die schwimmende Lagerung kann die starre Verschleißplatte entsprechend der von dem Steuernocken aufgebrachten Kraft folgen, und mittels der Vorspannung entsprechend ein sanftes Aufbringen dieser Kraft über die Klammerarme auf den Halteabschnitt ein sanftes und gleichzeitig zuverlässiges Halten von Behältern ermöglichen.

Die starre Verschleißplatte kann bevorzugt verschwenkbar und/oder verschiebbar an dem Steuerabschnitt gelagert sein, bevorzugt um ein Ende der Verschleißplatte herum verschwenkbar und/oder verschiebbar.

Entsprechend kann die starre Verschleißplatte auch an einer Position am Steuerabschnitt und/oder in der Ausnehmung eingespannt sein, so dass die starre Verschleißplatte entsprechend um dieser Einspannung herum eine Bewegung ausführen kann.

Bevorzugt ist die starre Verschleißplatte an dem Steuerabschnitt - beispielsweise in der Ausnehmung - elastisch gelagert, bevorzugt mittels eines elastischen Vorspannelements, eines Druckstücks, einer Feder, eines Magneten und/oder eines Elastomers.

Die starre Verschleißplatte kann auf die Steuernocke zu vorgespannt sein.

Mittels der elastischen Lagerung der starren Verschleißplatte kann zum einen ein sanftes Betätigen der Klammervorrichtung mittels der Steuernocke erreicht werden, und zum anderen können über die elastische Lagerung Toleranzen in der Behältergröße ausgeglichen werden, so dass entsprechend ein Halten von Behältern innerhalb eines bestimmten Toleranzbereiches sicher möglich ist. Dies ermöglicht auch in bestimmten Grenzen das sichere Halten von falsch gegriffenen Behältern.

In einer Alternative zur Bereitstellung eines Druckstücks kann der Steuerabschnitt des Klammerarms formelastisch ausgebildet sein. Dadurch kann trotz der starren Ausbildung der Verschleißplatte eine elastische Aufnahme der vom Steuernocken über die Verschleißplatte auf den Klammerarm aufgebrachten Kraft erreicht werden.

Um eine besonders standfeste Ausbildung der Klammervorrichtung zu erreichen, ist das Material der starren Verschleißplatte bevorzugt härter, als das Material des Klammerarms. Die starre Verschleißplatte kann aus einem Material ausgebildet sein, das eine höhere Verschleißresistenz aufweist, als das Material, aus dem der übrige Klammerarm ausgebildet ist. Auf diese Weise kann zum einen der Kammerarm so gestaltet werden, dass er die Anforderungen an die Dauerhaltbarkeit, das Gewicht, die Kosten sowie die Abreinigbarkeit beziehungsweise Sterilisierbarkeit erfüllt, auf der anderen Seite kann über die starre Verschleißplatte ein dediziertes Verschleißteil bereitgestellt werden, welches separat ausgetauscht werden kann, so dass im Falle einer erhöhten Abnutzung des Steuerabschnitts lediglich die starre Verschleißplatte ausgetauscht zu werden braucht, nicht hingegen der gesamte Klammerarm.

Die starre Verschleißplatte kann aus Metall, bevorzugt Edelstahl, besonders bevorzugt V4A-Edelstahl, ausgebildet sein und ein Steuernocken kann vorgesehen sein, welcher im Bereich seiner die starre Verschleißplatte kontaktierenden Kontaktflächen aus einem Kunststoffmaterial, bevorzugt einem PEEK-Material, ausgebildet ist. Unter PEEK-Material wird hier ein Polyetheretherketon Material verstanden.

In einer Alternative kann die starre Verschleißplatte aus einem PEEK Material ausgebildet sein und ein Steuernocken vorgesehen sein, welcher im Bereich seiner die starre Verschleißplatte kontaktierenden Kontaktflächen aus einem Metall, bevorzugt Edelstahl, besonders bevorzugt V4A-Edelstahl, ausgebildet sein.

Bevorzugt ist jeder Klammerarm an einer Verschwenkachse verschwenkbar gelagert. Dabei ist besonders bevorzugt eine Vorspannvorrichtung zwischen dem Halteabschnitt und der Verschwenkachse vorgesehen, welche die Halteabschnitte voneinander fort vorspannt, wobei die Vorspannvorrichtung bevorzugt durch eine Feder, ein Elastomer oder einen oder mehrere Magnete ausgebildet ist.

Als Material für die starre Verschleißplatte kann beispielsweise PEEK oder V4A-Stahl vorgesehen werden. Die starre Verschleißplatte hat bevorzugt eine Materialdicke, welche entsprechend die starren Eigenschaften der starren Verschleißplatte ermöglicht.

Es kann ein einziges elastisches Vorspannelement vorgesehen sein, das sich über einen bestimmten Bereich zwischen der starren Verschleißplatte und dem Steuerabschnitt des Klammerarms erstreckt.

Es können aber auch mehrere elastische Vorspannelemente vorgesehen sein, welche die elastische Vorspannung der starren Verschleißplatte gegenüber der Ausnehmung des Steuerabschnitts bereitstellen. Über die Ausbildung der elastischen Elemente sowie deren geometrische Verteilung entlang der Länge beziehungsweise entlang der Fläche der starren Verschleißplatte können entsprechend die elastischen Eigenschaften sowie die Verschließeigenschaften der Klammervorrichtung justiert werden. In einer bevorzugten Ausprägung sind die elastischen Vorspannelemente durch ein silikonartiges Elastomer mit einer Härte von ca. 40-60° Shore A vorgesehen. Die elastischen Vorspannelemente können auch jeweils in Form einer Feder, eines Druckstücks und/oder eines oderer mehrerer Magneten beziehungsweise Kombinationen dieser Elemente ausgebildet sein.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Draufsicht auf eine Klammervorrichtung in einem ersten Ausführungsbeispiel,
- Figur 2: eine schematische Draufsicht auf einen Teilbereich der Klammervorrichtung, wobei nur einer der Klammerarme sowie eine Steuernocke gezeigt ist, und
- Figur 3: eine schematische Darstellung unterschiedlicher Klammerarmpositionen bei fest positioniertem Steuernocken aufgrund einer elastischen Lagerung der starren Verschleißplatte.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

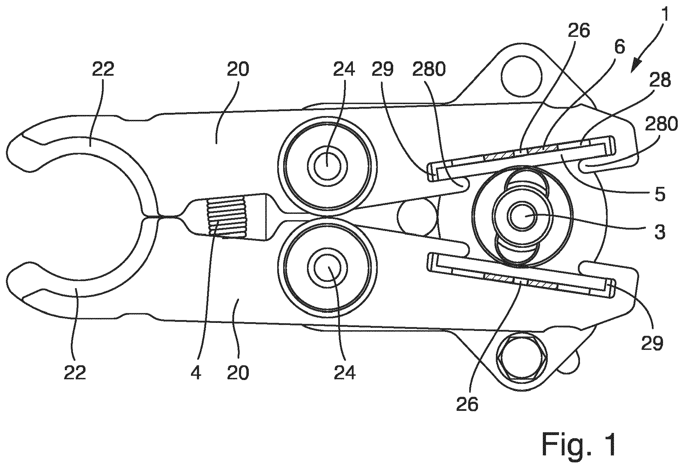

In Figur 1 ist schematisch in einer Draufsicht eine Klammervorrichtung 1 zum Halten eines hier nicht gezeigten Behälters in einer Behälterbehandlungsanlage gezeigt. Die Klammervorrichtung 1 ist insbesondere vorgesehen zum Halten von Flaschen in einer Getränkeabfüllanlage bei deren Transport durch die unterschiedlichen Behandlungsstationen der Getränkeabfüllanlage oder zum Halten während des Transports von einer Behandlungsstation zu einer nachfolgenden Behandlungsstation.

Die Klammervorrichtung 1 umfasst zwei Klammerarme 20, welche jeweils einen Halteabschnitt 22 aufweisen, der zur Anlage an den jeweils zu haltenden Behälter vorgesehen ist. Die Halteabschnitte 22 greifen dabei beispielsweise im Halsbereich einer in einer Getränkeabfüllanlage zu befüllenden Flasche an, um die Flasche in die entsprechende Behandlungsposition zu transportieren.

Die Klammerarme 20 sind jeweils an einer Schwenkachse 24 gelagert und um diese herum verschwenkbar, um ein Öffnen und Schließen der Klammervorrichtung 1 zu ermöglichen. Entsprechend werden die Halteabschnitte 22 durch das Verschwenken der Klammerarme 20 in eine Öffnungsposition oder eine Schließposition bewegt, wobei in der Öffnungsposition ein zu haltender Behälter zwischen die Halteabschnitte 22 gebracht werden kann und in der Schließposition die Halteabschnitte 22 in feste Anlage mit dem Behälter gebracht sind, um diesen zu halten. Damit wird eine aktive Anlage der Halteabschnitte 22 an den jeweils zu haltenden Behälter erreicht.

Ein Steuerabschnitt 26 ist in jedem Klammerarm 20 vorgesehen, welcher mit einem Steuernocken 3 in Kontakt tritt, um eine aktive Bewegung der Klammerarme 20 zu erreichen und insbesondere um ein aktives Verschwenken der Klammerarme 20 um die Schwenkachsen 24 herum zu ermöglichen.

Der Steuernocken 3 wird dabei entsprechend dem vorgegebenen Transportweg des jeweils zu haltenden Behälters angesteuert, so dass ein Öffnen der Klammervorrichtung 1 durch eine entsprechende Rotationsstellung des Steuernockens 3 erreicht werden kann, genauso wie ein aktives Schließen der Klammervorrichtung 1 und insbesondere ein Zusammenführen der Halteabschnitte 22 der beiden Klammerarme 20 derart, dass ein zu haltender Behälter zwischen den Halteabschnitten 22 gehalten ist.

In dem in Figur 1 gezeigten Ausführungsbeispiel wird über den Steuernocken 3 eine vom Steuernocken 3 in radialer Richtung aufgebrachte Kraft auf den Steuerabschnitt 26 übertragen, so dass sich entsprechend eine Verschwenkbewegung um die zwischen dem Steuerabschnitt 26 und dem Halteabschnitt 22 liegende Schwenkachse 24 ergibt, welche in Schließrichtung der Klammervorrichtung 1 wirkt und die Halteabschnitte 22 in die Schließposition bewegt.

Um in einer anderen Position des Steuernockens 3, in welcher dieser keine Kraft auf den Steuerabschnitt 26 auswirkt, ein selbstständiges und definiertes Öffnen der Klammervorrichtung 1 zu ermöglichen, ist eine Vorspannvorrichtung 4 vorgesehen, welche zwischen dem Halteabschnitt 22 und der Verschwenkachse 24 angeordnet ist und welche die beiden Klammerarme 20 in die Öffnungsposition auseinandertreibt. Entsprechend sind die Klammerarme 20 über die Vorspannvorrichtung 4 stets in die Öffnungsposition vorgespannt. Erst durch eine aktive Betätigung des Steuernockens 3 und dem Aufbringen einer entsprechenden Schließkraft auf den Steuerabschnitt 26 können die Halteabschnitte 22 dann entsprechend entgegen der Vorspannung der Vorspannvorrichtung 4 in die Schließstellung gebracht werden.

Die Vorspannvorrichtung 4 ist in dem gezeigten Ausführungsbeispiel in Form einer Feder vorgesehen. Die Vorspannvorrichtung 4 kann aber auch beispielsweise in Form eines Magneten, zweier sich gegenseitig abstoßender Magnete oder durch ein Elastomer ausgebildet sein.

In einem alternativen Ausführungsbeispiel kann die Schwenkachse 24 auch in einer anderen Position relativ zum Halteabschnitt 22 und zum Steuernocken 3 vorgesehen sein. Insbesondere ist es auch denkbar, die Halteabschnitte 22 und den Steuernocken 3 auf der gleichen Seite bezüglich der Schwenkachse 24 vorzusehen. Entsprechend wird durch eine Betätigung des Steuernocken 3 eine Kraft auf den Klammerarm 20 ausgeübt, welche die Halteabschnitte 22 dann in die Öffnungsposition bewegt.

Erfindungsgemäß ist im Klammerarm 20 im Bereich des Steuerabschnitts 26 eine starre Verschleißplatte 5 aufgenommen. In der in Figur 1 gezeigten Ausführungsform wird die starre Verschleißplatte 5 in direkten Kontakt mit dem Steuernocken 3 gebracht, um entsprechend die Kraft des Steuernockens 3 über die starre Verschleißplatte 5 auf den Steuerabschnitt 26 des Klammerarms 20 zu übertragen.

Die starre Verschleißplatte 5 ist im gezeigten Ausführungsbeispiel in Form einer 2-4 mm starken V2A-Edelstahlplatte ausgebildet. Die Bereiche des Steuernockens 3, welche mit der Verschleißplatte 5 in Kontakt kommen, sind bevorzugt aus einem PEEK-Material ausgebildet, so dass sicher eine besonders verschleißarme Paarung an Materialien ergibt. Unter PEEK-Material wird hier ein Polyetheretherketon Material verstanden.

Alternativ kann beispielsweise auch die Verschleißplatte 5 aus dem PEEK-Material ausgebildet sein und der Steuernocken 3 beziehungsweise die mit der Verschleißplatte 5 in Kontakt kommenden Bereiche des Steuernockens 3 beispielsweise durch V4A-Stahl ausgebildet sein.

Erfindungsgemäß ist die starre Verschleißplatte 5 in einer im Steuerabschnitt 26 vorgesehenen Ausnehmung 28 des Klammerarms 20 vorgesehen.

Die starre Verschleißplatte 5 ist in der Ausnehmung 28 erfindungsgemäß schwimmend gelagert. Entsprechend kann die Verschleißplatte 5 sich zumindest in einer Richtung innerhalb der Ausnehmung 28 bewegen, welche der Kraftwirkungsrichtung des Steuernockens 3 entspricht, wenn dieser mit der starren Verschleißplatte 5 in Kontakt gebracht wird.

Die Ausnehmung 28 ist entsprechend bevorzugt so ausgestaltet, dass der zwischen der Verschleißplatte 5 und dem die Ausnehmung 28 begrenzenden Material des Klammerarms 20 ausgebildete Spalt beispielsweise der Materialstärke der Verschleißplatte 5 entspricht.

Um ein Herausfallen der Verschleißplatte 5 in Richtung auf den Steuernocken 3 zu zu verhindern, ist die Ausnehmung 28 in dem Klammerarm 20 über Haltenasen 280 so ausgebildet, dass die starre Verschleißplatte 5 trotz ihrer schwimmenden Lagerung in der Ausnehmung 28 in dieser Ausnehmung 28 verbleibt, unabhängig von der jeweiligen Positionierung der Klammervorrichtung 1. Die starre Verschleißplatte 5 wird in dem gezeigten Ausführungsbeispiel weiterhin mittels zweier Haltebolzen 29 in der Ausnehmung 28 in Position gehalten. Damit wird die starre Verschleißplatte 5 in der Ausnehmung 28 in Richtung auf den Steuernocken 3 zu mittels der Haltenasen 280 am Herausfallen gehindert und in einer Ebene senkrecht dazu durch die Haltebolzen 29 an einem Herausfallen gehindert.

Über die Halterung mittels der Haltebolzen 29 und die Haltenasen 280 ist die starre Verschleißplatte 5 in der Ausnehmung 28 schwimmend gehalten beziehungsweise gelagert. Die starre Verschleißplatte 5 kann damit sowohl verschwenkt als auch verschoben werden. Eine Veschiebung der starren Verschleißplatte 5 kann dabei beispielsweise entlang der Haltebolzen 29 erreicht werden. Eine Verschwenkung der starren Verschleißplatte 5 kann beispielsweise um eines der in der Längserstreckung des Haltearms 20 ausgebildeten Enden der starren Verschleißplatte 5 ausgeführt werden.

Um einen Austausch der starren Verschleißplatte 5 zu ermöglichen ist in dem gezeigten Ausführungsbeispiel einer der Haltebolzen 29 entfernbar, so dass die starre Verschleißplatte 5 entfernt werden kann und durch eine neue starre Verschleißplatte 5 ersetzt werden kann.

Die starre Verschleißplatte 5 wird im gezeigten Ausführungsbeispiel eines oder mehrere Druckstücke 6 auf den Steuernocken 3 zu vorgespannt. Die Druckstücke 6 drücken die starre Verschleißplatte 5 damit auch gegen die Haltenasen 280 der Ausnehmung 28 derart, dass im entspannten Zustand der Klammervorrichtung 1, also wenn der Steuernocken 3 keine Kraft auf die starre Verschleißplatte 5 ausübt, die starre Verschleißplatte 5 an den Haltenasen 280 anliegt, so dass sich entsprechend ein Spalt zwischen der starren Verschleißplatte 5 und dem die Ausnehmung 28 begrenzenden Material des Haltearms 20 ausbildet.

Das Druckstück 6 beziehungsweise die Druckstücke 6 sind bevorzugt aus einem elastischen Material ausgebildet, beispielsweise einem Elastomermaterial. Bei dem Elastomermaterial des Druckstücks 6 kann es sich beispielsweise um ein Silikon-basiertes Elastomermaterial mit einer Härte von 40-60° Shore A handeln. Alternativ oder zusätzlich kann auch auf jede andere bekannte Weise eine elastische Vorspannung mittels eines elastischen Vorspannelements auf die starre Verschleißplatte 5 in Richtung auf den Steuernocken 3 zu aufgebracht werden, beispielsweise mittels einer Feder oder mittels eines Magneten.

Entsprechend kann die von dem Steuernocken 3 auf die starre Verschleißplatte 5 aufgebrachte Kraft beim Schließen der Klammervorrichtung 1 sanft auf die Klammerarme 20 im Steuerabschnitt 26 übertragen werden. Insbesondere werden hier Kraftspitzen über die elastische Vorspannung abgefangen.

Je nach Anforderung können ein einzelnes elastisches Vorspannelement oder zwei, drei oder eine Mehrzahl an elastischen Vorspannelementen vorgesehen sein. Über die Auswahl der elastischen Vorspannelemente kann die Charakteristik des Schließvorgangs beim Betätigen des Steuernockens 3 eingestellt werden - insbesondere über die jeweilige Härte des elastischen Vorspannelements.

Weiterhin ist es möglich, durch eine Kombination unterschiedlicher elastischer Vorspannelemente die Charakteristik über die Verschließbewegung hinweg zu variieren. Ist beispielsweise das elastische Vorspannelement, das beim anfänglichen Kontakt des Steuernockens 3 mit der starren Verschleißplatte 5 unter dem Kontaktpunkt liegt, weicher als das daneben liegende elastische Vorspannelement, das erst später unter dem Kontaktpunkt liegt, so kann ein besonders weicher Ansatz beim ersten Anlegen der Halteabschnitte 22 an den jeweiligen zu haltenden Behälter erreicht werden, wobei darauf hin dann die ausgeübte Haltekraft dann ansteigt.

Weiterhin ermöglicht es das Bereitstellen des oder der Druckstücke 6, dass die über die Halteabschnitte 22 auf den jeweils zu haltenden Behälter aufgebrachte Kraft (innerhalb eines Toleranzbereichs) unabhängig von den Maßen des gegriffenen Behälters ist.

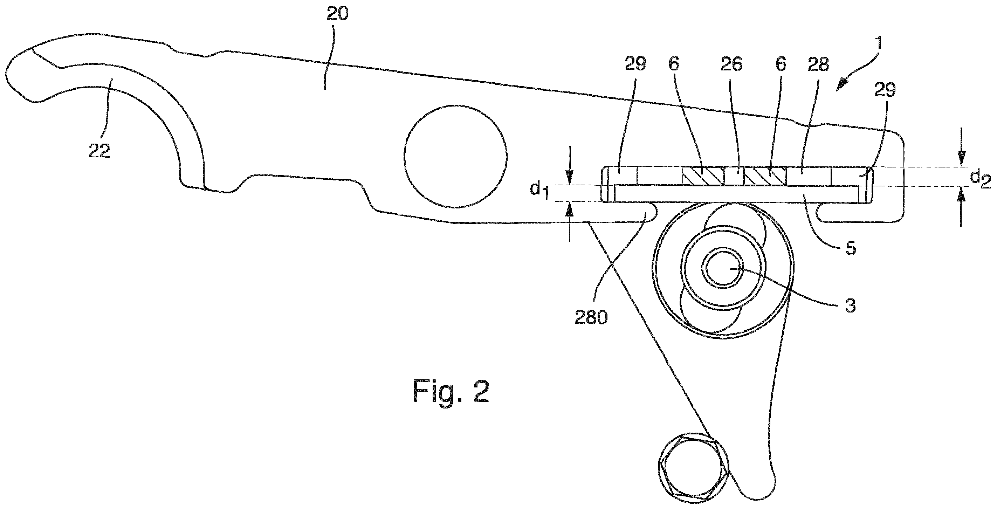

In Figur 2 ist noch einmal ein Klammerarm 20 der Klammervorrichtung 1 in einer Detaildarstellung gezeigt.

Im Bereich des Steuerabschnitts 26 ist wiederum die starre Verschleißplatte 5 angeordnet, welche eine Dicke d₁ aufweist. Die Dicke der Verschleißplatte 5 entspricht in dem gezeigten Ausführungsbeispiel in etwa dem Abstand d₂ zwischen der starren Verschleißplatte 5 und dem Material des Klammerarms 20, welches die Ausnehmung 28 definiert. Entsprechend kann sich die Verschleißplatte 5 innerhalb der Ausnehmung 28 um maximal den Abstand d₂ von dem Steuernocken 3 fort bewegen. Hier ist jedoch eine Begrenzung durch die Druckstücke 6 vorgegeben, da eine vollständige Kompression dieser Druckstücke 6 nicht möglich ist.

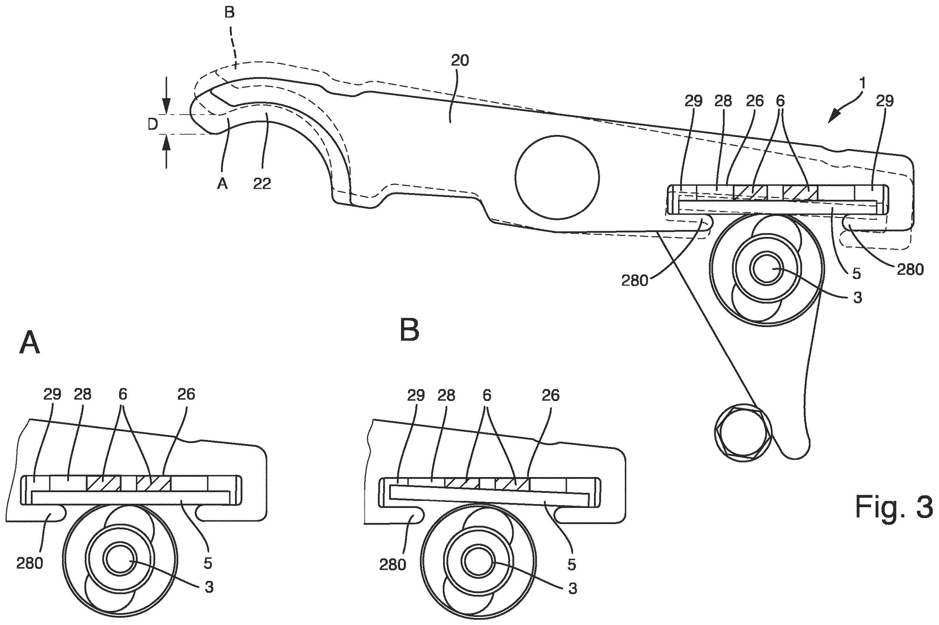

In Figur 3 ist der in Figur 2 gezeigte Teil der Klammervorrichtung 1 noch einmal in einer ersten Position A gezeigt, in welcher die Verschleißplatte 5 direkt an dem Steuernocken 3 und auch an den Haltenasen 280 der Ausnehmung anliegt. Entsprechend ist die starre Verschleißplatte 5 in einer definierten Position und die Kraft, welche von dem Steuernocken 3 auf die Verschleißplatte 5 ausgeübt wird, überschreitet nicht die Kraft, welche von den Druckstücken 6 ausgeübt wird, so dass eine Kompression der Druckstücke 6 nicht vorliegt.

In Figur 3 ist die Klammervorrichtung 1 in einer zweiten Position B gezeigt, in welcher der Haltebereich 22 etwas weiter nach außen bewegt ist, und entsprechend eine Kompression des Druckstücks 6 stattgefunden hat. Die starre Verschleißplatte 5 ist damit entgegen der durch die Druckstücke 6 aufgebrachten Vorspannung bewegt, um auf diese Weise entgegen der elastischen Vorspannung durch die Druckstücke 6 den Haltebereich 22 des Klammerarms 20 entsprechend in die Position B nach außen zu bewegen. Hieraus ergibt sich entsprechend die erweiterte Öffnung, welche um einen Abstand D weiter geöffnet wurde, und welche es ermöglicht, bei einer vorgegebenen Stellung des Steuernockens 3 das Halten eines Behälters mit einem erweiterten Durchmesser ebenfalls zu ermöglichen.

Die beiden Ausschnittsvergrößerungen A und B zeigen noch einmal das Verhalten der starren Verschleißplatte 5 beim Aufbringen einer Kraft, die zu einer Kompression der Druckstücke 6 führt.

Auf diese Weise können entsprechend leicht abweichende Radien oder auch Fehlgriffe, bei denen die Halteabschnitte 22 nicht genau am vorgesehenen Ort des Behälters angreifen, kompensiert werden.

In einer Alternative kann anstelle der Druckstücke auch der Steuerabschnitt 26 des Klammerarms 20 formelastisch ausgebildet sein, so dass die auf die starre Verschleißplatte 5 mittels des Steuernockens 3 aufgebrachten Kräfte dann dennoch elastisch auf den Klemmarm 20 übergeben werden können.

### Bezugszeichenliste

- 1: Klammervorrichtung
- 20: Klammerarm
- 22: Halteabschnitt
- 24: Schwenkachse
- 26: Steuerabschnitt
- 28: Ausnehmung
- 280: Haltenase
- 29: Haltebolzen
- 3: Steuernocken
- 4: Vorspannvorrichtung
- 5: starre Verschleißplatte
- 6: elastisches Druckstück
- d₁: Dicke der starren Verschleißplatte
- d₂: Tiefe des Spalts
- D: erweiterter Öffnungswinkel

## Patentansprüche

1. Klammervorrichtung (1) zum Halten eines Behälters in einer Behälterbehandlungsanlage, umfassend zwei Klammerarme (20) mit jeweils einem Halteabschnitt (22) zur Anlage an den zu haltenden Behälter und mit jeweils einem Steuerabschnitt (26), auf welchen ein Steuernocken (3) zum Bewegen der Halteabschnitte (22) in eine Öffnungsposition und/oder in eine Schließposition wirkt, wobei
an dem Steuerabschnitt (26) eine starre Verschleißplatte (5) angeordnet ist, auf welche der Steuernocken (3) wirkt, und
die starre Verschleißplatte (5) in einer am Steuerabschnitt (26) vorgesehenen Ausnehmung (28) des Klammerarms (20) angeordnet, schwimmend an dem Steuerabschnitt (26) gelagert und über eine Haltenase (280) in der Ausnehmung (28) gehalten ist.

2. Klammervorrichtung (1) gemäß Anspruch 1, **dadurch gekennzeichnet, dass** die Haltenase (280) einstückig mit dem Klammerarm (20) ausgebildet ist.

3. Klammervorrichtung (1) gemäß einem der vorstehenden Ansprüche, **dadurch gekennzeichnet, dass** die starre Verschleißplatte (5) mittels einer Halterung, eines Haltebolzens (29) oder eines Formschlusselements schwimmend an dem Steuerabschnitt (26) gelagert ist.

4. Klammervorrichtung (1) gemäß Anspruch 1, **dadurch gekennzeichnet, dass** die starre Verschleißplatte (5) verschwenkbar und/oder verschiebbar an dem Steuerabschnitt (26) gelagert ist, bevorzugt um ein Ende der Verschleißplatte (5) herum verschwenkbar und/oder verschiebbar.

5. Klammervorrichtung (1) gemäß einem der vorstehenden Ansprüche, **dadurch gekennzeichnet, dass** die starre Verschleißplatte (5) an dem Steuerabschnitt (26) elastisch gelagert ist, bevorzugt mittels elastischen Vorspannelements, eines Druckstücks (6), einer Feder, eines Magneten und/oder eines Elastomers.

6. Klammervorrichtung (1) gemäß einem der vorstehenden Ansprüche, **dadurch gekennzeichnet, dass** die starre Verschleißplatte (5) an dem Steuerabschnitt (26) auf die Steuernocke (3) zu vorgespannt ist.

7. Klammervorrichtung (1) gemäß einem der vorstehenden Ansprüche, **dadurch gekennzeichnet, dass** der Steuerabschnitt (26) des Klammerarms (20) formelastisch ausgebildet ist.

8. Klammervorrichtung (1) gemäß einem der vorstehenden Ansprüche, **dadurch gekennzeichnet, dass** das Material der starren Verschleißplatte (5) härter ist, als das Material des Klammerarms (20).

9. Klammervorrichtung (1) gemäß einem der vorstehenden Ansprüche, **dadurch gekennzeichnet, dass** die starre Verschleißplatte (5) aus Metall, bevorzugt Edelstahl, besonders bevorzugt V4A-Edelstahl, ausgebildet ist und ein Steuernocken (3) vorgesehen ist, welcher im Bereich seiner die starre Verschleißplatte (5) kontaktierenden Kontaktflächen aus einem PEEK-Material ausgebildet ist.

10. Klammervorrichtung (1) gemäß einem der Ansprüche 1 bis 9, **dadurch gekennzeichnet, dass** die starre Verschleißplatte (5) aus einem PEEK-Material ausgebildet ist und ein Steuernocken (3) vorgesehen ist, welcher im Bereich seiner die starre Verschleißplatte (5) kontaktierenden Kontaktflächen aus einem Metall, bevorzugt Edelstahl, besonders bevorzugt V4A-Edelstahl, ausgebildet ist.

11. Klammervorrichtung (1) gemäß einem der vorstehenden Ansprüche, **dadurch gekennzeichnet, dass** jeder Klammerarm (20) an einer Verschwenkachse (24) verschwenkbar gelagert ist.

12. Klammervorrichtung (1) gemäß Anspruch 11, **dadurch gekennzeichnet, dass** eine Vorspannvorrichtung (4) zwischen dem Halteabschnitt (22) und der Verschwenkachse (24) vorgesehen ist, welche die Halteabschnitte (22) voneinander fort vorspannt, wobei die Vorspannvorrichtung (4) bevorzugt durch eine Feder, ein Elastomer oder Magnete ausgebildet ist.

## Claims

1. A clamping device (1) for holding a container in a container treatment plant, comprising two clamping arms (20), each with a holding portion (22) for contact with the container to be held and each with a control portion (26) on which a control cam (3) acts to move the holding portions (22) into an open position and/or into a closed position, wherein
a rigid wear plate (5) is arranged on the control portion (26), on which the control cam (3) acts, and
the rigid wear plate (5) is arranged in a recess (28) of the clamping arm (20) provided on the control portion (26), is mounted in a floating manner on the control portion (26) and is held in the recess (28) by a retaining lug (280).

2. The clamping device (1) according to claim 1, **characterized in that** the retaining lug (280) is formed integrally with the clamping arm (20).

3. The clamping device (1) according to any of the preceding claims,
**characterized in that** the rigid wear plate (5) is mounted in a floating manner on the control portion (26) by means of a holder, a retaining bolt (29) or a positive-locking element.

4. The clamping device (1) according to claim 1, **characterized in that** the rigid wear plate (5) is pivotably and/or displaceably mounted on the control portion (26), preferably mounted so as to be pivotable about one end of the wear plate (5) or displaceable relative thereto.

5. The clamping device (1) according to any of the preceding claims,
**characterized in that** the rigid wear plate (5) is elastically mounted on the control portion (26), preferably by means of an elastic preloading element, a pressure piece (6), a spring, a magnet and/or an elastomer.

6. The clamping device (1) according to any of the preceding claims,
**characterized in that** the rigid wear plate (5) on the control portion (26) is preloaded against the control cam (3).

7. The clamping device (1) according to any of the preceding claims,
**characterized in that** the control portion (26) of the clamping arm (20) is configured to be form-elastic.

8. The clamping device (1) according to any of the preceding claims,
**characterized in that** the material of the rigid wear plate (5) is harder than the material of the clamping arm (20).

9. The clamping device (1) according to any of the preceding claims,
**characterized in that** the rigid wear plate (5) is made of metal, preferably stainless steel, particularly preferably V4A stainless steel, and a control cam (3) is provided which is made of a PEEK material in the region of its contact surfaces contacting the rigid wear plate (5).

10. The clamping device (1) according to any of claims 1 to 9,
**characterized in that** the rigid wear plate (5) is made of a PEEK material and a control cam (3) is provided which, in the region of its contact surfaces contacting the rigid wear plate (5), is made of a metal, preferably stainless steel, particularly preferably V4A stainless steel.

11. The clamping device (1) according to any of the preceding claims,
**characterized in that** each clamping arm (20) is pivotably mounted on a pivot axis (24).

12. The clamping device (1) according to claim 11, **characterized in that** a preloading device (4) is provided between the holding portion (22) and the pivot axis (24), which device preloads the holding portions (22) away from one another, wherein the preloading device (4) is preferably formed by a spring, an elastomer or magnets.

## Revendications

1. Dispositif de serrage (1) permettant de maintenir un récipient dans une installation de traitement de récipients, comprenant deux bras de serrage (20) comportant respectivement une section de maintien (22) pour l'appui sur le récipient à maintenir et comportant respectivement une section de commande (26) sur laquelle agit une came de commande (3) pour déplacer les sections de maintien (22) dans une position d'ouverture et/ou dans une position de fermeture, dans lequel
une plaque d'usure rigide (5) est disposée sur la section de commande (26), sur laquelle plaque agit la came de commande (3), et
la plaque d'usure rigide (5) est disposée dans un évidement (28), prévu sur la section de commande (26), du bras de serrage (20), est montée flottante sur la section de commande (26) et est maintenue dans l'évidement (28) par l'intermédiaire d'un ergot de maintien (280).

2. Dispositif de serrage (1) selon la revendication 1, **caractérisé en ce que** l'ergot de maintien (280) est réalisé d'un seul tenant avec le bras de serrage (20).

3. Dispositif de serrage (1) selon l'une des revendications précédentes,
**caractérisé en ce que** la plaque d'usure rigide (5) est montée flottante sur la section de commande (26) au moyen d'un support, d'un boulon de maintien (29) ou d'un élément de verrouillage par complémentarité de forme.

4. Dispositif de serrage (1) selon la revendication 1, **caractérisé en ce que** la plaque d'usure rigide (5) est montée de manière à pouvoir pivoter et/ou coulisser sur la section de commande (26), de préférence de manière à pouvoir pivoter et/ou coulisser autour d'une extrémité de la plaque d'usure (5).

5. Dispositif de serrage (1) selon l'une des revendications précédentes,
**caractérisé en ce que** la plaque d'usure rigide (5) est montée de manière élastique sur la section de commande (26), de préférence au moyen d'un élément de précontrainte élastique, d'une pièce de pression (6), d'un ressort, d'un aimant et/ou d'un élastomère.

6. Dispositif de serrage (1) selon l'une des revendications précédentes,
**caractérisé en ce que** la plaque d'usure rigide (5) est précontrainte vers la came de commande (3) au niveau de la section de commande (26).

7. Dispositif de serrage (1) selon l'une des revendications précédentes,
**caractérisé en ce que** la section de serrage (26) du bras de serrage (20) est de forme élastique.

8. Dispositif de serrage (1) selon l'une des revendications précédentes,
**caractérisé en ce que** le matériau de la plaque d'usure rigide (5) est plus dur que le matériau du bras de serrage (20).

9. Dispositif de serrage (1) selon l'une des revendications précédentes,
**caractérisé en ce que** la plaque d'usure rigide (5) est réalisée en un métal, de préférence en acier inoxydable, de manière particulièrement préférée en acier inoxydable V4A, et une came de commande (3) est prévue, laquelle est réalisée en un matériau PEEK dans la zone de ses surfaces de contact en contact avec la plaque d'usure rigide (5).

10. Dispositif de serrage (1) selon l'une des revendications 1 à 9,
**caractérisé en ce que** la plaque d'usure rigide (5) est réalisée en un matériau PEEK et une came de commande (3) est prévue, laquelle est réalisée en un métal, de préférence en acier inoxydable, de manière particulièrement préférée en acier inoxydable V4A, dans la zone de ses surfaces de contact en contact avec la plaque d'usure rigide (5).

11. Dispositif de serrage (1) selon l'une des revendications précédentes,
**caractérisé en ce que** chaque bras de serrage (20) est monté de manière à pouvoir pivoter sur un axe de pivotement (24).

12. Dispositif de serrage (1) selon la revendication 11, **caractérisé en ce qu'**un dispositif de précontrainte (4) est prévu entre la section de maintien (22) et l'axe de pivotement (24), lequel dispositif de précontrainte précontraint les sections de maintien (22) en les éloignant l'une de l'autre, dans lequel le dispositif de précontrainte (4) est de préférence réalisé par un ressort, un élastomère ou des aimants.
